# FASCICULE DE BREVET EUROPEEN

(11) **EP 2 575 572 B1**
(45) Date de publication et mention de la délivrance du brevet: **07.10.2015**
(21) Numéro de dépôt: 11721040.1
(22) Date de dépôt: 23.05.2011
(51) Int. Cl.: A47J 31/46, A47J 31/36

(54) **DISPOSITIF D'INFUSION A VARIATION DE PRESSION**
INFUSIONSVORRICHTUNG MIT DRUCKUNTERSCHIEDEN
INFUSION DEVICE HAVING PRESSURE VARIATION

(30) Priorité: 25.05.2010 FR 1054014
(43) Date de publication de la demande: 10.04.2013
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Decobert, Jean-Pascal
(86) Numéro de dépôt international: PCT/EP2011/058384
(87) Numéro de publication internationale: WO 2011/147786

(56) Documents cités:
- EP-A1- 1 219 217
- EP-A1- 1 295 554

## Description

La présente invention est relative à un dispositif et une machine de production de boisson par infusion d'une substance. La mouture de café, en vrac, compactée ou emballé dans un conditionnement étanche à l'eau ou non fait partie de telles substances. Des feuilles de thé ou d'autres produits tels du chocolat, dé la soupe ou des plantes en feuilles ou en extraits font aussi parties de ces substances pour lesquelles le terme infusion s'entend au sens large d'une extraction de composants buvables par écoulement d'eau au travers de la substance. L'invention s'applique particulièrement aux machines de préparation de boissons par infusion, notamment pour des boissons de type expresso.

Dans ce dernier domaine, la réalisation d'un café expresso s'effectue par infusion d'une quantité prédéfinie de café torréfié et moulu avec de l'eau chaude à très haute pression au travers d'une chambre d'infusion préalablement fermée.

La démocratisation du café expresso a conduit à l'apparition de machines à café expresso domestiques utilisant des portions pré-dosées de café, sous forme de dosette ou capsule contenant l'exacte quantité de café préalablement torréfié et moulu de façon idéale.

Dans ce domaine, l'infusion est typiquement réalisée par placement de la portion pré-dosée dans un volume, ici appelé chambre d'infusion, au travers duquel on fait passer de l'eau chaude sous pression. En aval de la chambre d'infusion, une boisson issue de l'extraction de la substance infusable est récupérée. La phase d'extraction implique la mise de la chambre en position fermée alors que l'introduction de la substance et son évacuation s'opèrent chambre ouverte.

Pour faciliter le positionnement de la dose tout en limitant ses manipulations, différents systèmes ont été développés tout au long des dernières décennies. L'un des systèmes les plus courants est d'avoir recours à une chambre d'infusion réalisée en deux parties, l'une étant fixe et l'autre rendue mobile. Les configurations ouverte et fermée de la chambre d'infusion peuvent être générées par une mobilité relative de deux parties de la chambre d'infusion. La publication WO-A1-9507041 est une illustration de ce principe avec un conditionnement de substance à infuser sous forme de dose dont le volume intérieur est délimité par une enveloppe à base de papier filtre et par un anneau en matière cartonnée.

L'une des deux demi chambres comporte l'arrivée d'eau chaude sous pression tandis que l'autre présente un bec par lequel est distribué le café infusé depuis la dose contenue dans la chambre d'infusion. La pression d'infusion est assurée par une pompe embarquée dans la machine et est couramment une pompe vibrante dont le principe de fonctionnement repose sur le déplacement d'un noyau magnétique au travers d'un cylindre, sous l'effet d'une bobine magnétique alimentée par la tension alternative du secteur au travers d'une diode. Le cylindre est raccordé de façon étanche au circuit d'eau tant en amont qu'en aval de la pompe. Une diode coupe toutes les demi alternances négatives du secteur et provoque l'alimentation de la bobine pendant la moitié du temps de chaque alternance. L'alimentation de la bobine génère, dans les pièces ferromagnétiques qui l'entourent, un champ magnétique proportionnel au nombre de spires de la bobine et à l'intensité du courant qui la traverse. Le circuit magnétique constitué des pièces ferromagnétiques autour de la bobine est volontairement ouvert à proximité du noyau central. Sous l'effet du champ magnétique de la bobine, une induction tend à fermer ce circuit magnétique par le déplacement du noyau mobile. Un ressort est appliqué sur l'une des faces du noyau pour provoquer son retour en position initiale en l'absence de champ magnétique. Sous l'effet de la tension alternative du secteur, le noyau central est déplacé pendant la moitié du temps d'une alternance sous l'effet du champ magnétique généré par la bobine et revient en position sous l'effet du ressort pendant la seconde moitié du temps de l'alternance.

Par un jeu de deux clapets anti-retour correctement disposés en sortie du tube dans lequel évolue le noyau magnétique central, ce noyau aspire de l'eau en amont à l'entrée de la pompe et la repousse vers la sortie en aval. Il existe une relation entre la pression présente dans le circuit hydraulique en aval de la pompe et son débit, relation qui se traduit par une courbe de fonctionnement caractéristique et qui reste similaire pour toutes les pompes vibrantes du marché.

Le document EP-A1-1 295 554 divulgue une machine à café avec un obturateur monté contre un ressort dont la précontrainte peut définir un niveau de pression d'eau à atteindre pour l'ouverture de l'obturateur et la circulation d'eau vers la mouture de café. Ce document confirme que le comportement hydraulique du circuit d'injection d'eau est communément défini en usine.

L'invention permet de pallier au moins en partie les inconvénients des techniques connues jusqu'alors et propose à cet effet un dispositif d'infusion comme défini dans la revendication 1.

Cette commande par l'extérieur de la chambre d'infusion implique qu'il n'est pas nécessaire d'intervenir au niveau de la partie d'entrée et de la partie de sortie, notamment par leur face située à l'intérieur de la chambre d'infusion, pour varier la pression. Un intérêt potentiel est la capacité de modifier la pression au cours de l'infusion. Les moyens de commande comportent des moyens accessibles à l'utilisateur opérant la fabrication de la boisson. Cette accessibilité s'opère depuis l'extérieur du dispositif. Ce dernier est préférentiellement intégré dans une machine incluant d'autres composants. Dans ce cas, la commande peut s'opérer via des moyens présents sur une surface externe de la machine, notamment une surface d'un capot. Cela n'exclut pas que les moyens de commande soient protégés par un couvercle amovible. Ils restent accessibles lors de l'utilisation normale du dispositif intégré dans la machine.

Grâce à l'invention, et avantageusement sans lourde modification du circuit d'eau et en employant une pompe classique telle une pompe vibrante, on peut faire varier la pression de travail et le débit qui en découle dans la chambre d'infusion dans une large gamme de valeurs. C'est un progrès notable car, actuellement, l'application de ce type de pompe ou d'autres moyens de mise sous pression de l'eau aux machines à café domestiques limite leurs possibilités et il est actuellement admis qu'une machine n'est dévolue qu'à un type de boissons ou à des types de boissons impliquant des valeurs de pression d'infusion similaires.

Les techniques actuelles souffrent d'un lourd préjugé selon lequel une machine correspond exclusivement à un type de boissons.

L'avantage est de pouvoir proposer à l'utilisateur de nouvelles variétés de dosettes contenant des produits à infuser très différents du café expresso tels que du chocolat, de la soupe, des potages, du café long, du thé et des infusions de plantes qui peuvent être infusées dans de meilleures conditions sur la même machine. Cette possibilité repose sur l'ajout de moyens qui permettent de faire varier le réglage du point de fonctionnement pression/débit vers les valeurs idéales donnant le meilleur niveau qualitatif sur le plan organoleptique pour chaque type de boisson. Le dispositif propose un réglage simple préférentiellement accessible à l'utilisateur comme par exemple la rotation d'un bouton de commande ou l'appui sur une touche de contrôle.

Un intérêt est de disposer d'un seul appareil électroménager qui permet de réaliser tous les types de boissons. Cela permet un gain de place conséquent dans une cuisine, réduit la consommation d'énergie et des ressources et génère moins de déchets.

L'ajout d'un tel dispositif avantageux a également un impact majeur sur l'organisation industrielle, sur les coûts de production et sur l'image de marque et la qualité perçue par la clientèle.

En outre, ce dispositif de pression variable peut être proposé en option sur des machines équipées en série d'un dispositif invariable, offrant ainsi à l'utilisateur la possibilité d'améliorer sa machine en remplaçant quelques pièces et d'augmenter la longévité de sa machine.

Avantageusement, la variation de pression est provoquée par une variation de pertes de charges, en particulier au moyen d'éléments constituant un obstacle de configuration variable dans l'écoulement d'eau.

D'autres buts et avantages apparaîtront au cours de la description détaillée qui suit. Auparavant, on indique des caractéristiques optionnelles qui peuvent être mises en oeuvre de manière alternative ou cumulée dans le cadre de l'invention :
- un capot recouvre au moins partiellement la chambre d'infusion, les moyens de commande étant accessibles par la face extérieure du capot ;
- les moyens de commande sont configurés pour commander les moyens de réglage en position fermée de la chambre d'infusion ;
- les moyens de commande sont configurés pour commander les moyens de réglage de sorte à faire varier la pression d'eau au cours du passage du flux d'eau au travers de la substance à infuser ;
- les moyens de commande comportent un organe déplaçable manuellement, la pression d'eau étant fonction de la position de l'organe déplaçable manuellement ;
- les moyens de commande comportent un circuit électrique et au moins un bouton de commande du circuit électrique ;
- les moyens de commande comportent des moyens de stockage de données relatifs à au moins un profil de pression à appliquer lors d'un cycle d'infusion.
- les moyens réglables comportent un clapet monté à l'encontre des moyens élastiques de rappel et configuré pour obturer le canal d'injection lorsque la pression d'eau exercée sur le clapet est inférieure à la force de rappel des moyens élastiques et des moyens de réglage de la force de rappel,
- les moyens élastiques comportent un organe compressible et les moyens de réglage comportent des moyens de variation de la compression de l'organe compressible,
- les moyens de variation de la compression comprennent un élément d'appui sur l'organe compressible, ledit élément d'appui étant réglable en position suivant la direction de compression de l'organe compressible,
- les moyens de variation de la compression comportent une vis formant une glissière hélicoïdale de déplacement de l'élément d'appui.
- l'élément d'appui est un coulisseau mobile en translation sous une action de vissage ou de dévissage de la vis,
- la vis est montée mobile uniquement en rotation et la glissière hélicoïdale est formée entre la vis et le coulisseau.
- le dispositif comporte une surface de blocage en translation de la vis, ladite surface étant mobile entre une position active de blocage de la vis et une position inactive d'extraction de la vis,
- la surface de blocage est configurée pour s'appliquer sur une surface d'appui de la vis en exerçant sur la vis un effort s'opposant à la décompression de l'organe compressible,
- le dispositif comprend des moyens d'actionnement en rotation de la vis,
- les moyens d'actionnement comportent un organe rotatif de commande manuelle ou d'entraînement par moteur commandé.
- l'organe compressible est un ressort hélicoïdal.

L'invention concerne aussi une machine de production de boisson par infusion comportant un dispositif selon l'invention et un circuit d'eau sous pression doté d'une pompe qui peut être une pompe vibrante.

L'invention est aussi relative à un procédé pour l'infusion d'une substance à infuser comme défini dans la revendication 23.

Préférentiellement, l'étape de variation est opérée durant le passage du flux d'eau au travers de la substance à infuser.

Les dessins ci-joints sont donnés à titre d'exemples et ne sont pas limitatifs de l'invention. Ils représentent seulement un mode de réalisation de l'invention et permettront de la comprendre aisément.
La figure 1 illustre en coupe longitudinale un mode de réalisation du dispositif de l'invention.
La figure 2 montre en perspective partielle des moyens réglables suivant un mode de réalisation préféré.
Les figures 3 à 5 présentent des vues en coupe de l'invention suivant trois positions de fonctionnement.
Les figures 6 à 11 montrent des possibilités de configurations de certaines parties de l'invention.
Les figures 12 à 17 révèlent des phases successives de démontage des moyens réglables de l'invention.
Les figures 18 et 19 sont des vues éclatées en perspective.
Les figures 20 à 22 montrent des possibilités d'intégration des moyens réglables dans un dispositif d'infusion.

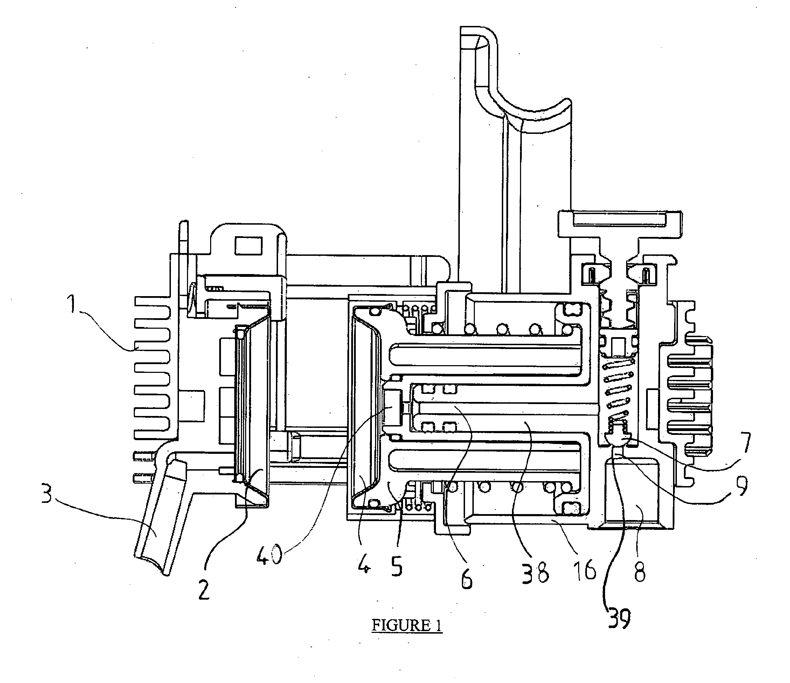

Dans l'exemple représenté en figure 1 et à titre préféré, l'invention s'adresse à des machines utilisant des conditionnements de substances à infuser permettant de façon au moins en partie automatisée de produire des boissons issues de l'infusion de la substance contenue dans les conditionnements.

Le dispositif de la figure 1 comporte un châssis 1 sous forme de ceinture périphérique apte à supporter différents composants internes. L'un d'entre eux est une partie d'entrée 4, un autre est une partie de sortie 2. Les parties 2 et 4 sont susceptibles d'être rapprochées ou éloignées, par exemple par le mouvement de la partie d'entrée 4 qui coopère dans le cas illustré avec un vérin dont le piston forme les moyens d'entraînement 5 raccordés à partie d'entrée 4. Le vérin comporte par ailleurs un corps 16 et des moyens de rappel en position d'ouverture de la chambre d'infusion par défaut. Ce type de mobilité n'est pas limitatif et d'autres moyens de déplacement entrent dans le cadre de l'invention. De même, des mobilités combinées associant rotation et translation ainsi qu'un mouvement de la partie de sortie 2 sont également possibles.

Lorsqu'elles sont rapprochées et accostées les parties 2 et 4 délimitent un volume intérieur constitutif d'une chambre d'infusion. Le conditionnement, par exemple à base de feuilles de papier filtre assemblées à leur pourtour, peut contenir différenties sortes de substances à infuser telles qu'indiquées dans la partie introductive de la présente description. Il s'ensuit des modalités variées, en terme de conditions d'écoulement de flux d'eau au travers de la substance à infuser.

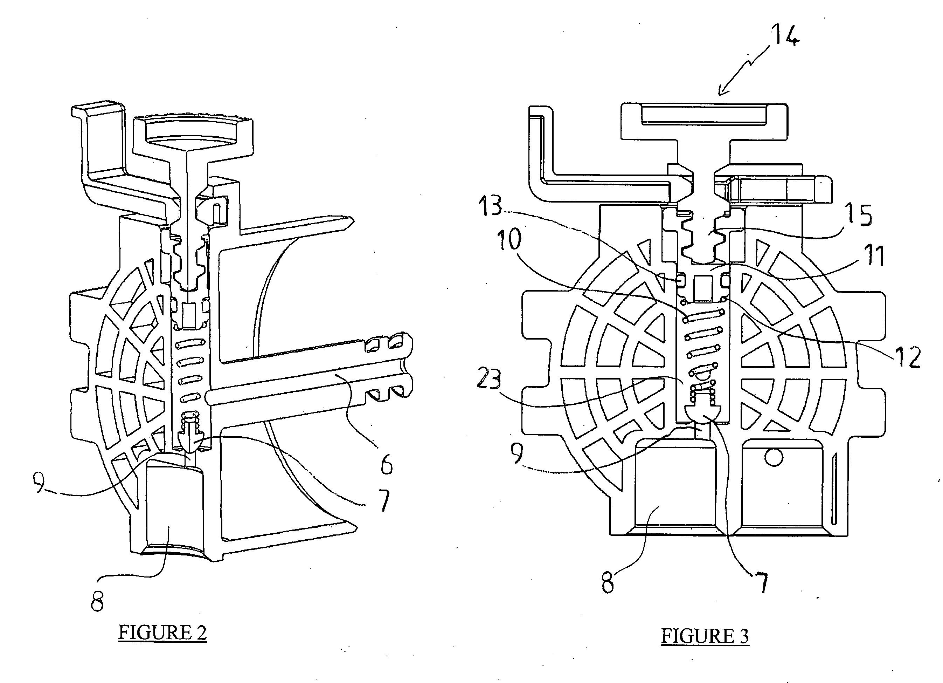

On donne ci-après un exemple de circulation d'eau au travers du dispositif de l'invention. D'une façon générale, le dispositif est configuré pour coopérer avec un circuit d'eau sous pression. Le circuit en question prévoit avantageusement un réservoir de stockage d'eau, une chaudière apte à réchauffer l'eau en particulier pour la réalisation de boissons chaudes et une pompe telle qu'une pompe de type vibrante permettant la mise sous pression, à un niveau de pression déterminé, de l'eau dans le circuit d'eau. Le circuit est raccordé au dispositif de l'invention par l'intermédiaire d'une bouche de raccordement 8 dont un exemple est présenté notamment aux figures 1 et 2 pour amener l'eau du circuit, au niveau d'une extrémité d'admission 39, vers un canal d'injection au moins en partie situé, dans le cas représenté, à l'intérieur du vérin constitutif des moyens d'entraînement 5. Plus précisément, le piston des moyens d'entraînement 5 est guidé autour d'une pièce de guidage central 38 à l'intérieur de laquelle est formée une partie aval 6 du canal d'injection, le terme « aval » s'entendant suivant le sens d'écoulement de l'eau. Une partie amont 9 du canal d'injection est formée, les parties 6 et 9 étant séparées par des moyens qui seront détaillés plus loin.

La partie aval 6 du canal d'injection débouche au niveau de la partie d'entrée 4 en une extrémité d'injection 40, ici représentée sous forme d'une cuvette présentant des perforations susceptibles d'assurer l'amenée de l'eau dans le volume intérieur de la chambre d'infusion lorsque celle-ci est en position fermée. On comprend que l'eau passe au travers du volume intérieur de la chambre d'infusion contenant la substance à infuser puis s'écoule via un ou des passages formés dans la partie de sortie 2 vers un bec 3 au niveau duquel un contenant peut être positionné. La présente invention permet le réglage des paramètres d'écoulement d'eau dans le dispositif et particulièrement au niveau du canal d'injection. Dans le cas illustré, la variation est une variation de pression par perte de charge modifiable opérée entre la partie amont 9 et la partie aval 6 dudit canal d'injection. A noter que la configuration représentée pour le canal d'injection n'est pas limitative.

Les figures 2 à 5 montrent plus précisément un exemple de réalisation des moyens réglables de variation de la pression d'eau dans le canal d'injection.

A la figure 2, on a représenté un clapet 7 apte à s'appliquer sur une ouverture pratiquée dans le canal d'injection entre sa partie amont 9 et sa partie aval 6. Plus précisément, le canal d'injection présente au niveau du clapet 7 une réservation intermédiaire dans le canal d'injection au niveau de laquelle le clapet 7 est susceptible d'un débattement apte à autoriser l'écoulement de l'eau dans le canal d'injection ou à obturer ledit canal pour ne pas autoriser l'écoulement d'eau. Le clapet 7 est représenté sous forme sensiblement ogivale ou arrondie et bouche de façon étanche le passage du canal d'injection. Pour s'appliquer sur l'ouverture de la partie amont 9, le clapet 7 est monté à l'encontre de moyens élastiques de rappel en position d'obturation par défaut. A titre d'illustration, ces moyens élastiques peuvent être un ressort hélicoïdal susceptible d'être comprimé comme représenté aux diverses figures. Une des extrémités du ressort 10, l'extrémité inférieure, est en appui sur une portion du clapet 7 opposée à sa surface d'obturation du canal d'injection. L'autre extrémité du ressort 10, l'extrémité supérieure, est en appui sur une base d'appui 12 représentée en figure 3. On comprend que la mise en compression des moyens élastiques assure une pression sur le clapet 7 de sorte à le placer en position d'obturation par défaut. Cette position d'obturation peut être contrée lorsque la pression exercée sur le clapet 7 par l'eau issue du circuit sous pression est supérieure à une valeur prédéterminée correspondant à l'effort de rappel assuré par les moyens élastiques ici sous forme d'un ressort 10. Selon l'invention, le dispositif est réglable de sorte à faire varier l'effort de rappel des moyens élastiques pour modifier les pertes de charge induites par le fonctionnement du clapet 7.

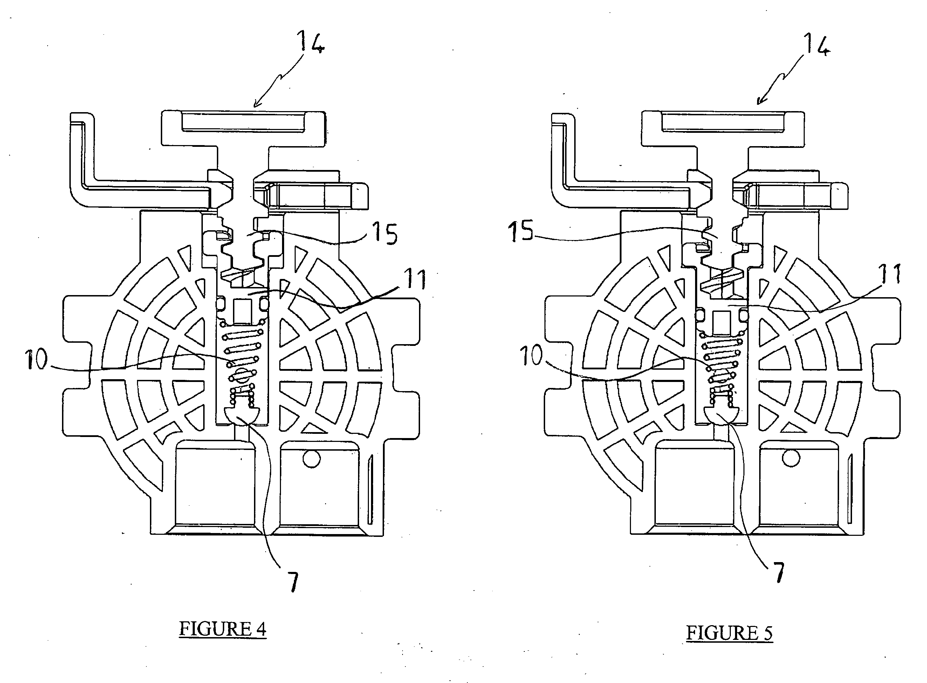

Ainsi, en figure 3, une mise en compression minimale du ressort 10 est représenté produisant un effort de rappel sur le clapet 7 d'une première valeur peu élevée. En figure 4, le ressort 10 est comprimé davantage, si bien que la pression exercée sur le clapet 7 augmente. Une compression encore supérieure est illustrée en figure 5. On comprend que, alors que dans le cas de la figure 3 la pression en aval du clapet 7 sera moins élevée et le débit plus important, ces deux valeurs évoluent inversement au fur et à mesure de la compression du ressort 10. Ainsi, dans la situation de la figure 5, la pression aval au clapet 7 est nettement plus élevée et le débit nettement moindre. Grâce aux réglages de la pression exercée par les moyens élastiques sur le clapet 7, on peut ainsi faire varier dans de larges proportions les paramètres d'écoulement et en particulier la pression par exemple entre 2 et 20 bars.

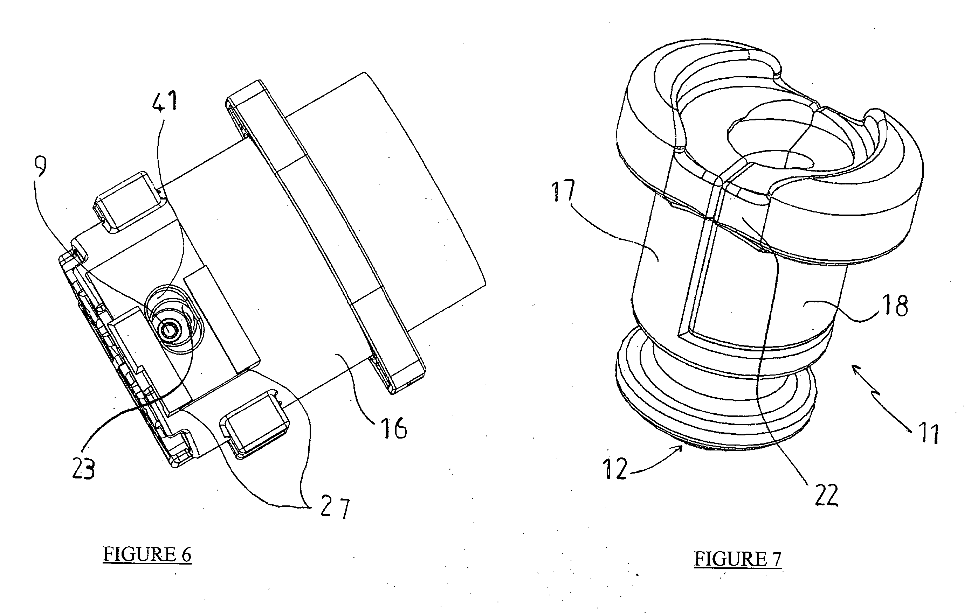

Cette variation s'opère, dans le mode illustré, par l'intermédiaire d'un système exploitant une glissière hélicoïdale. Plus précisément, la modification de compression de l'organe compressible constitué par le ressort 10 s'effectue par un mouvement de translation de la base d'appui 12 sur laquelle est appliquée l'extrémité du ressort 10 opposée au clapet 7. A titre préféré, la base d'appui 12 est une portion de surface d'un coulisseau 11 monté de façon à opérer un mouvement de translation suivant une direction correspondant à la direction du ressort 10 dans un trou 23 formé dans le corps du dispositif comme cela ressort notamment de la figure 6. On notera, par le biais des figures 6 et 7, la forme extérieure du coulisseau 11 et la forme du trou 23 qui sont réalisées de manière similaire de sorte à ce que ces deux éléments coopèrent et que le coulisseau 11 puisse avantageusement être guidé en translation en supprimant sa possibilité de rotation. Cela s'effectue en particulier par l'intermédiaire de surface de guidage 22, ici représentée sous forme de plats dans une section relativement oblongue du coulisseau 11.

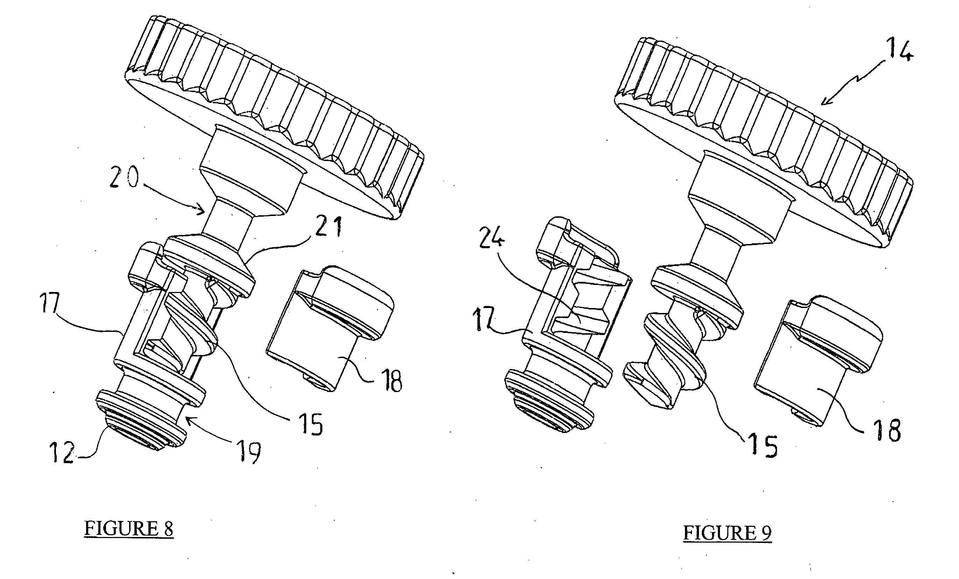

Le coulisseau 11 comporte dans son volume intérieur un taraudage 24 dont un exemple ressort partiellement en figure 9 dans une partie 17 constitutive du coulisseau 11 coopérant avec une deuxième partie 18 qui lui est rapportée. Le coulisseau est avantageusement constitué de deux parties dissymétriques dont l'une est solidaire de la base d'appui pour en permettre son extraction. Les formes simples des pièces 17 et 18 permettent leur réalisation économique par injection sous pression de matière plastique

Le taraudage 24 coopère avec les filets 15 d'une vis 14 de sorte à réaliser la glissière hélicoïdale précédemment évoquée. Cette liaison assure, lorsqu'une rotation de la vis 14 est opérée, un mouvement de translation du coulisseau 11 apte à entraîner vers le haut ou vers le bas la base d'appui 12 sur laquelle s'applique l'organe compressible constitué dans l'exemple par le ressort 10.

La vis 14 comporte une tête 25 dont la configuration peut être adaptée au mode d'actionnement en rotation souhaité. Par exemple, dans le cas des figures 9 à 11, la tête 25 comporte une partie périphérique constitutive d'une couronne dentée 26 facilitant sa manipulation par l'utilisateur. La couronne dentée forme ainsi des moyens de commande à actionnement manuel. On verra ultérieurement d'autres possibilités d'entraînement en rotation de la vis 14. En particulier, les moyens de commande peuvent inclure une partie électrique ou électronique pour l'actionnement par moteur.

La partie du trou 23 dans laquelle est située le ressort 10 et le clapet 7 étant amenée à être en contact avec l'eau circulant dans le canal d'injection (cette partie du trou 23 est une réservation qui fait partie du canal d'injection dans lequel circule l'eau à amener dans la chambre d'infusion). Il convient d'en assurer l'étanchéité relativement au reste du trou 23 et notamment relativement à la portion située à l'extérieur pour le réglage de la rotation de la vis 14. A cet effet, le coulisseau 11 présente dans l'exemple une gorge 19 dans laquelle peut être inséré un joint 13 apte à s'appliquer de façon étanche sur le pourtour du trou 23 à cet endroit avantageusement circulaire. L'effort d'étanchéité assuré radialement par le joint provoque un frottement ayant pour effet, en absence de pression dans le trou 23, de bloquer le coulisseau 11 en translation. La solidarisation de la gorge du joint avec la partie 17 formant le coulisseau 11 permet de forcer le déplacement du coulisseau 11 sous l'action du filetage 15 sur le taraudage 24 et de faciliter son extraction complète éventuelle.

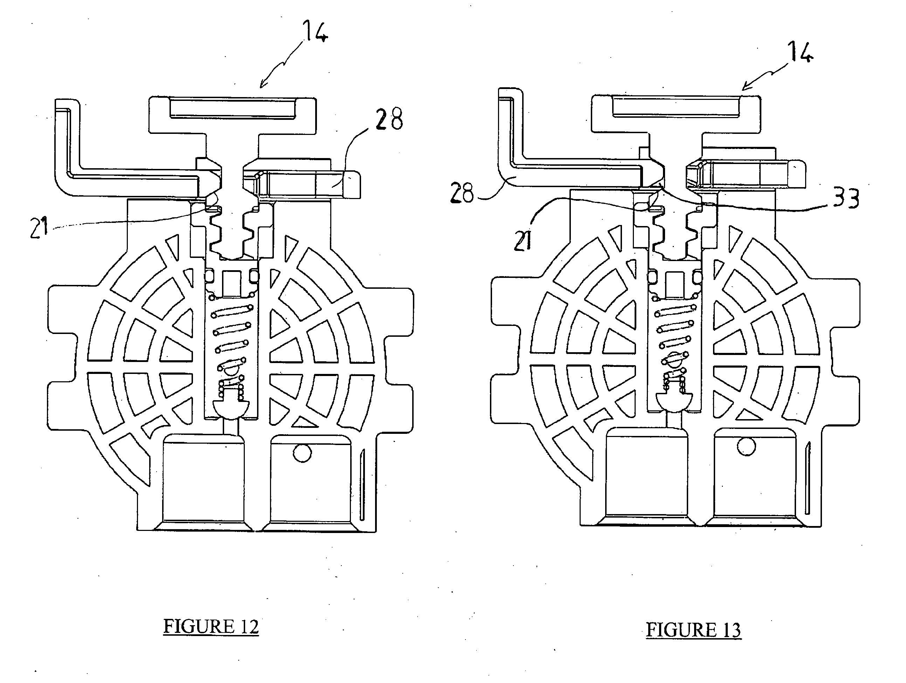

Par ailleurs, le système de réglage ainsi présenté peut être aisément démonté notamment pour des opérations de maintenance ou de réparation. Un exemple de faculté de montage et de remontage est donné ci-après en référence aux figures 12 à 19. Ce démontage s'opère avantageusement depuis la coque extérieure de la machine, sans démontage des parties de la chambre d'infusion.

A la figure 12, on a repéré une surface d'appui 21 sur le corps de la vis 14 apte à coopérer avec une portion d'un verrou 28 susceptible d'arrêter la translation de la vis 14 suivant sa direction longitudinale. Par le biais du verrou 28, on permet à la vis 14 d'opérer un mouvement de rotation en lui interdisant un mouvement de translation. Avantageusement, la surface d'appui 21 est formée au niveau d'une gorge 20 repérée en figure 8. La surface d'appui 21 est préférentiellement inclinée tout comme la surface correspondante sur le verrou 28. Cette configuration, fonctionnelle pour assurer le réglage de la pression d'eau, est celle de la figure 12.

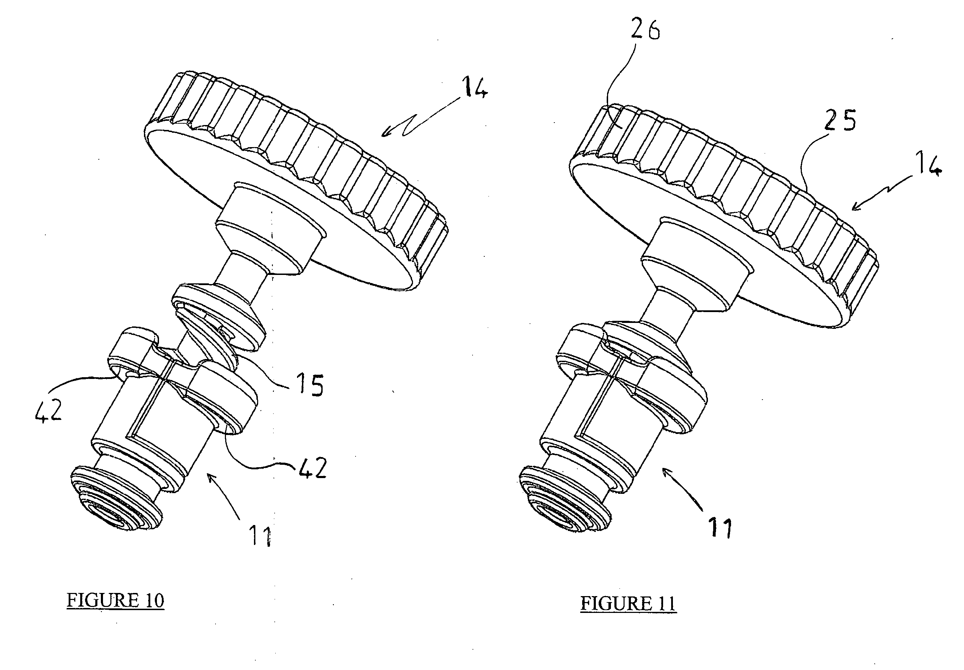

Lorsque l'on souhaite opérer le démontage des moyens réglables, il convient de contrarier l'effort d'application exercé par la surface de blocage 33 du verrou 28 sur la surface d'appui 21 de la vis 14 de sorte à permettre un mouvement du verrou 28. Le fait de devoir surmonter cet effort d'application est une sécurité supplémentaire de l'invention qui évite, lorsque les pressions exercées par l'eau sont élevées, d'interdire à un utilisateur de déplacer facilement le verrou 28. Plus encore, le démontage des moyens réglables est avantageusement rendu impossible en cas de réglage à la plus importante pression. En effet dans cette situation de réglage de la pression maximale, les surfaces de contact sous le coulisseau repérées 42,42 en figure 10 viennent en contact avec la surface de limite de course 41 limitant la partie supérieure du trou 23 et visible en figure 6. Dans cette configuration la translation verticale vers le bas de l'ensemble coulisseau 11 et vis 14 n'est pas possible. Il est alors nécessaire de dévisser la vis 14 sur le coulisseau 11, provoquant la décompression du système, jusqu'à obtenir une distance entre la surface 21 et la surface de blocage 33 pour autoriser le déplacement transversal du verrou 28. A cet effet, on tire également profit de la pression d'eau au niveau de la partie 23 dans laquelle s'écoule l'eau pour opérer une faculté de démontage des moyens réglables conditionnés à de basses pressions.

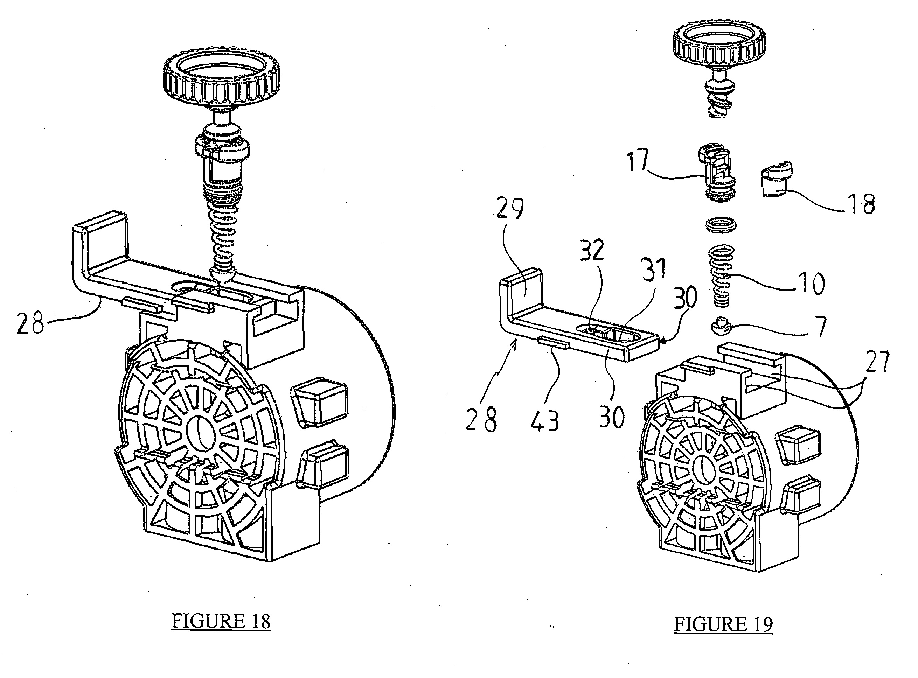

Dans le cas de la figure 13, la pression étant suffisamment basse pour permettre à l'utilisateur de mettre en mouvement la vis 14 dans le sens d'une compression, le verrou 28 peut être actionné, avantageusement par un mouvement de translation suivant une direction transverse à la direction de compression du ressort 10 de sorte à en modifier la position. Le mouvement de translation du verrou 28 peut s'opérer via les surfaces planes latérales 30 réalisés sur le verrou 28 et coopérant avec des rails 27 formés sur une partie de corps du dispositif. Cet exemple ressort notamment de la figure 19.

Sur cette même figure 19 apparaissent des butées transversales 43 qui ont pour but de limiter la course du verrou 28 afin de ne pas altérer la vis 14 lors du montage par un sectionnement de cette vis au niveau de sa gorge 20 présentant une faible section transversale et donc une plus grande fragilité.

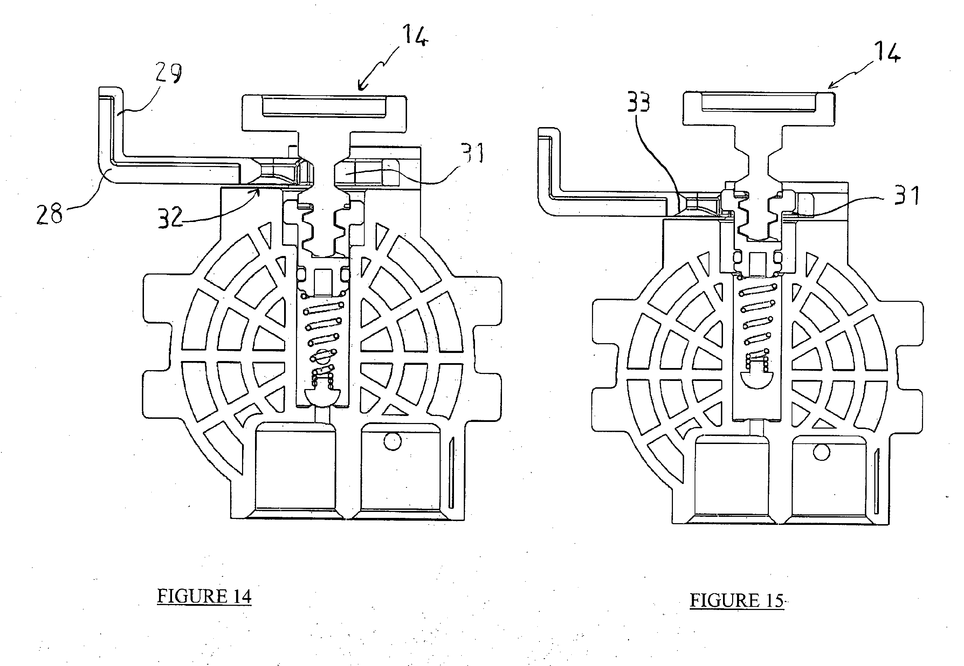

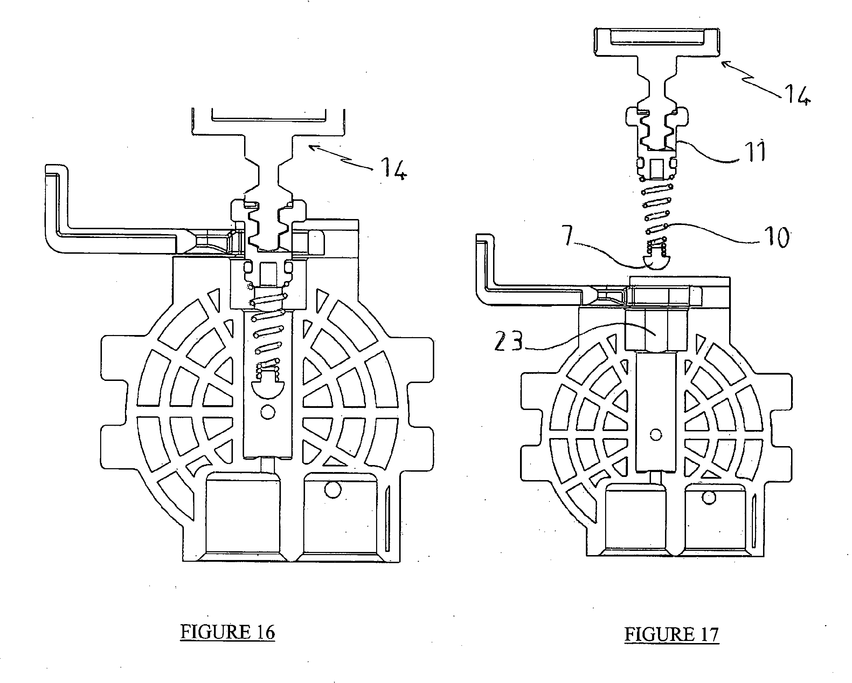

Le verrou 28 ainsi placé en position de démontage, l'ensemble parvient à la situation de la figure 14. A ce stade, alors qu'auparavant la surface de blocage 33 était active pour interdire la translation de la vis 14, la surface 33 est alors inactive et n'est plus au regard de la surface d'appui 21. Ainsi, alors qu'en position de blocage la vis 14 traverse un orifice de blocage du verrou 28, elle se retrouve dans le cas de la figure 14 au regard d'un orifice d'extraction 31 dont les dimensions sont telles que la vis 14 peut le franchir. Le mouvement d'extraction de la vis 14 qui s'ensuit est illustré en figure 15. La figure 16 montre une étape successive d'extraction, le mouvement de l'ensemble coulisseau/ressort/clapet suivant le mouvement d'extraction de la vis 14. En figure 17, l'extraction des moyens réglables est entièrement réalisée. La figure 18 montre le résultat obtenu en perspective et la figure 19 illustre la capacité de séparer les pièces constitutives des moyens réglables notamment pour les remplacer ou les nettoyer.

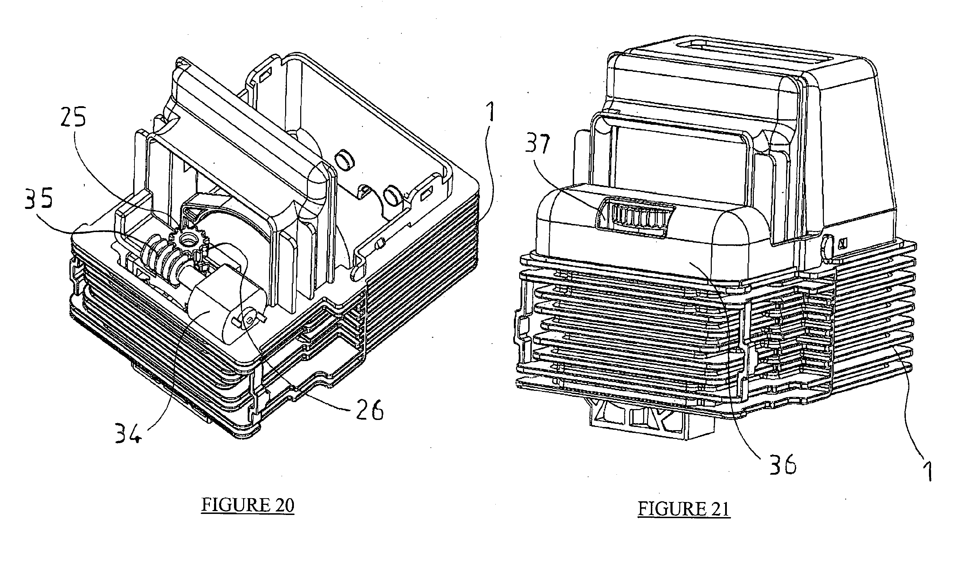

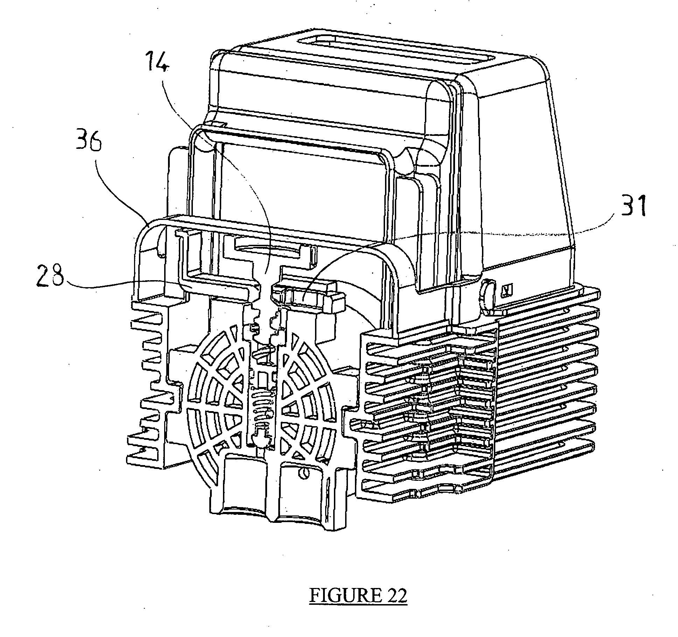

Une première possibilité d'action de l'utilisateur est la faculté d'agir directement et manuellement sur la vis 14 pour en modifier la position angulaire. C'est le cas représenté aux figures 21 et 22 où le dispositif comporte un capot 36 solidaire du châssis 1 et comportant une lumière 37 par le biais de laquelle la couronne dentée 36 de la tête 25 de la vis 14 est au moins partiellement accessible pour une manipulation par l'utilisateur. Eventuellement, un repère de la position angulaire de la vis est fourni pour permettre de lire la pression de travail correspondant à la position angulaire de la vis 14.

Suivant une autre possibilité, la rotation de la vis 14 est motorisée. Cela autorise notamment une commande par l'intermédiaire d'un bouton de commande, par exemple situé en façade d'une machine de production de boissons, ou une commande totalement automatique à détection d'un type de conditionnement parmi une liste de types de conditionnements prédéfinis à chacun desquels est affecté un paramétrage de pression d'eau. Par exemple, un capteur peut identifier un type de conditionnement par sa couleur, sa forme, un tag qu'il porte ou autre, et induire une commande spécifique de la motorisation.

La motorisation est illustrée en figure 20 sous forme d'un moteur 14, tel un moteur électrique, entraînant une vis sans fin 35 elle-même engrènant avec une couronne dentée 25 formée solidairement à la vis 14.

Il est ainsi possible de faire varier simplement et efficacement le point de fonctionnement pression/débit d'une machine pour lui faire admettre l'infusion à basse pression par exemple de café filtre, de chocolat ou d'autres substances ou l'infusion à ultra haute pression de thé ou, en position de pression intermédiaire l'infusion de café pour des boissons expresso.

A noter que la variation de pression opérée par l'invention peut s'effectuer avant le début d'un cycle d'infusion, pour atteindre un niveau de pression cible, ou suivre un profil de variation de pression au moins durant une partie du cycle d'infusion. La pression peut donc être ajustée manuellement ou automatiquement durant l'infusion.

Des moyens de stockage de données peuvent être présents pour mémoriser des profils de pression et/ou des types de conditionnement. Avantageusement, l'utilisateur peut mémoriser des profils de pression fixe ou variable le long du cycle.

Toutes les pièces constituant le dispositif ici décrit peuvent être réalisées avec des formes simples permettant d'être réalisées en matière plastique injectée pour rendre très économique sa fabrication.

**REFERENCES**

| | | | |
|---|---|---|---|
| 1. | Châssis | 23. | Trou |
| 2. | Partie de sortie | 24. | Taraudage |
| 3. | Bec | 25. | Tête |
| 4. | Partie d'entrée | 26. | Couronne dentée |
| 5. | Moyens d'entraînement | 27. | Rails |
| 6. | Partie aval du canal d'injection | 28. | Verrou |
| 7. | Clapet | 29. | Patte |
| 8. | Bouche de raccordement | 30. | Guide |
| 9. | Partie amont du canal d'injection | 31. | Orifice d'extraction |
| 10. | Ressort | 32. | Orifice de blocage |
| 11. | Coulisseau | 33. | Surface de blocage |
| 12. | Base d'appui | 34. | Moteur |
| 13. | Joint | 35. | Vis sans fin |
| 14. | Vis | 36. | Capot |
| 15. | Filet | 37. | Lumière |
| 16. | Corps | 38. | Pièce de guidage |
| 17. | Première partie | 39. | Extrémité d'admission |
| 18. | Deuxième partie | 40. | Extrémité d'injection |
| 19. | Gorge | 41. | Surface de limite de course |
| 20. | Gorge | 42. | Surfaces de contact du coulisseau |
| 21. | Surface d'appui | | |
| 22. | Surface de guidage | 43. | Butées transversales |

## Revendications

1. Dispositif pour l'infusion d'une substance à infuser présentant :
- une chambre d'infusion destinée à recevoir la substance à infuser et à faire passer un flux d'eau sous pression au travers de la substance à infuser, la chambre d'infusion présentant une partie d'entrée (4) d'eau dans la chambre d'infusion et une partie de sortie (2) de boisson infusée,
- un canal d'injection en communication fluidique, par une extrémité d'injection (40), avec la partie d'entrée (4) et raccordable, par une extrémité d'admission (39), à un circuit d'eau sous pression,
**caractérisé en ce qu'**il comporte des moyens réglables de variation de la pression d'eau dans le canal d'injection agencés pour générer une différence de pression d'eau entre l'extrémité d'admission (39) et l'extrémité d'injection (40) et commandés par des moyens de commande extérieurs à la chambre d'infusion, les moyens de commande comportant des moyens accessibles à l'utilisateur opérant la fabrication de la boisson, cette accessibilité s'opérant depuis l'extérieur du dispositif.

2. Dispositif selon la revendication 1 comportant un capot (36) recouvrant au moins partiellement la chambre d'infusion, les moyens de commande étant accessibles par la face extérieure du capot (36).

3. Dispositif selon l'une des revendications précédentes dans lequel les moyens de commande sont configurés pour commander les moyens de réglage en position fermée de la chambre d'infusion.

4. Dispositif selon la revendication précédente dans lequel les moyens de commande sont configurés pour commander les moyens de réglage de sorte à faire varier la pression d'eau au cours du passage du flux d'eau au travers de la substance à infuser.

5. Dispositif selon l'une des revendications précédentes dans lequel les moyens de commande comportent un organe déplaçable manuellement, la pression d'eau étant fonction de la position de l'organe déplaçable manuellement.

6. Dispositif selon des revendications 1 à 4 dans lequel les moyens de commande comportent un circuit électrique et au moins un bouton de commande du circuit électrique.

7. Dispositif selon la revendication précédente dans lequel les moyens de commande comportent des moyens de stockage de données relatifs à au moins un profil de pression à appliquer lors d'un cycle d'infusion.

8. Dispositif selon la revendication précédente dans lequel les moyens réglables sont des moyens de variation de pertes de charges.

9. Dispositif selon la revendication précédente dans lequel les moyens réglables comportent :
- un clapet (7) monté à l'encontre des moyens élastiques de rappel et configuré pour obturer le canal d'injection lorsque la pression d'eau exercée sur le clapet (7) est inférieure à la force de rappel des moyens élastiques ;
- des moyens de réglage de la force de rappel.

10. Dispositif selon la revendication précédente dans lequel les moyens élastiques comportent un organe compressible et dans lequel les moyens de réglage comportent des moyens de variation de la compression de l'organe compressible.

11. Dispositif selon la revendication précédente dans lequel les moyens de variation de la compression comprennent un élément d'appui sur l'organe compressible, ledit élément d'appui étant réglable en position suivant la direction de compression de l'organe compressible.

12. Dispositif selon la revendication précédente dans lequel les moyens de variation de la compression comportent une vis (14) formant une glissière hélicoïdale de déplacement de l'élément d'appui.

13. Dispositif selon la revendication précédente dans lequel l'élément d'appui est un coulisseau (11) mobile en translation sous une action de vissage ou de dévissage de la vis (14).

14. Dispositif selon la revendication précédente dans lequel la vis (14) est montée mobile uniquement en rotation et dans lequel la glissière hélicoïdale est formée entre la vis (14) et le coulisseau (11).

15. Dispositif selon la revendication précédente comportant une surface (33) de blocage en translation de la vis (14), ladite surface étant mobile entre une position active de blocage de la vis (14) et une position inactive d'extraction de la vis (14).

16. Dispositif selon la revendication précédente dans lequel la surface (33) de blocage est configurée pour s'appliquer sur une surface d'appui (21) de la vis (14) en exerçant sur la vis (14) un effort s'opposant à la décompression de l'organe compressible.

17. Dispositif selon l'une des revendications 12 à 16, les moyens de commande comprenant des moyens d'actionnement en rotation de la vis (14).

18. Dispositif selon la revendication précédente dans lequel les moyens d'actionnement comportent un organe rotatif de commande manuelle ou d'entraînement par moteur commandé.

19. Dispositif selon la revendication précédente comportant un repère de la position angulaire de la vis.

20. Dispositif selon l'une des revendications 4 à 11 dans lequel l'organe compressible est un ressort (10) hélicoïdal.

21. Machine de production de boisson par infusion comportant un dispositif selon l'une des revendications précédentes et un circuit d'eau sous pression doté d'une pompe.

22. Machine selon la revendication précédente dans laquelle la pompe est une pompe vibrante.

23. Procédé pour l'infusion d'une substance à infuser dans lequel on effectue les étapes suivantes :
- réception d'une substance à infuser dans une chambre d'infusion présentant une partie d'entrée (4) d'eau dans la chambre d'infusion et une partie de sorte (2) de boisson infusée ;
- passage d'un flux d'eau sous pression au travers de la substance à infuser via un canal d'injection en communication fluidique, par une extrémité d'injection (40), avec la partie d'entrée (4) et raccordé, par une extrémité d'admission (39), à un circuit d'eau sous pression,
**caractérisé en ce qu'**il comporte une étape de variation de la pression d'eau dans le canal d'injection pour générer une différence de pression entre l'extrémité d'admission (39) et l'extrémité d'injection (40), ladite variation étant commandée par l'extérieur de la chambre d'infusion par des moyens de commande extérieurs à la chambre d'infusion, les moyens de commande comportant des moyens accessibles à l'utilisateur opérant la fabrication de la boisson, cette accessibilité s'opérant depuis l'extérieur du dispositif.

24. Procédé selon la revendication précédente dans lequel l'étape de variation est opérée durant le passage du flux d'eau au travers de la substance à infuser.

## Patentansprüche

1. Vorrichtung zum Brühen einer zu brühenden Substanz, welche folgendes aufweist:
- eine Brühkammer, die dazu dient, die brühende Substanz aufzunehmen und einen unter Druck stehenden Wasserstrom durch die zu brühende Substanz laufen zu lassen, wobei die Brühkammer einen Eintrittsbereich (4) für Wasser und einen Austrittsbereich (2) für das aufgebrühte Getränk aufweist.
- einen Einspritzkanal, der durch ein Einspritzende (40) mit dem Eintrittsbereich (4) in fluider Verbindung steht und durch ein Einlassende (39) an einen Druckwasserkreis angeschlossen werden kann, **dadurch gekennzeichnet**, das er regulierbare Mittel zur Veränderung des Wasserdrucks im Einspritzkanal aufweist, welche so angeordnet sind, dass ein Wasserdruckunterschied zwischen dem Einlassende (39) und dem Einspritzende (40) generiert werden kann, und welche gesteuert werden durch Bedienelemente außerhalb der Einspritzkammer, wobei die Bedienelemente Mittel enthalten, die für den Benutzer, der das Getränk herstellt, zugänglich sind, und diese Zugänglichkeit zur Vorrichtung von außen gewährleistet wird.

2. Vorrichtung nach Anspruch 1, welche eine Abdeckung (36) aufweist, welche die Brühkammer mindestens teilweise bedeckt, wobei die Bedienelemente an der Außenseite der Abdeckung (36) zugänglich sind.

3. Vorrichtung nach einem der vorhergehenden Ansprüche, in der die Bedienelemente so angeordnet sind, dass sie bei geschlossener Position der Brühkammer bedient werden können.

4. Vorrichtung nach dem vorhergehenden Anspruch, in dem die Bedienelemente so angeordnet sind, dass der Wasserdruck beim Durchlaufen des Wasserstroms durch die zu brühende Substanz an den Einstellmitteln verändert werden kann.

5. Vorrichtung nach einem der vorhergehenden Ansprüche, in der die Bedienelemente ein manuell bewegliches Teil enthalten, wobei der Wasserdruck von der Stellung des manuell beweglichen Teils abhängt

6. Vorrichtung nach den Ansprüchen 1 bis 4, in der die Bedienmittel einen Stromkreis und mindestens einen Bedienknopf für den Stromkreis enthalten.

7. Vorrichtung nach dem vorgehenden Anspruch, in dem die Bedienmittel Datenspeicherungsmittel für mindestens ein, bei einen Brühzyklus anzuwendendes Druckprofil enthalten.

8. Vorrichtung nach dem vorhergehenden Anspruch, demzufolge die regulierbaren Mittel Mittel zur Veränderung des Druckverlustes sind.

9. Vorrichtung nach dem vorhergehenden Anspruch, in dem die regulierbaren Mittel folgendes umfassen:
- eine Klappe (7) die an elastische Rückholvorrichtungen montiert und so konfiguriert ist, dass der Einspritzkanal verschlossen wird, wenn der auf die Klappe (7) ausgeübte Druck kleiner als die Rückholkraft der elastischen Mittel ist;
- Mittel zur Einstellung der Rückholkraft.

10. Vorrichtung nach dem vorhergehenden Anspruch, in der die elastischen Mittel ein zusammendrückbares Element enthalten und in der die Einstellmittel Mittel zur Veränderung des Drucks des zusammendrückbaren Elements enthalten.

11. Vorrichtung nach dem vorhergehenden Anspruch, in der die Mittel zur Veränderung des Drucks ein Element zur Auflage auf das zusammendrückbare Element enthalten, wobei die Position des besagten Auflageelements je nach Druckrichtung des zusammenpressbaren Elements verstellbar ist.

12. Vorrichtung nach dem vorhergehenden Anspruch, in dem die Mittel zur Änderung des Drucks eine Schraube (14) umfassen und eine spiralförmige Schiene zum Verschieben des Auflageelements bilden.

13. Vorrichtung nach dem vorhergehenden Anspruch, in dem das Auflageelement ein Schieber (11) ist, der sich durch Lösen oder Anziehen der Schraube (14) verschieben lässt.

14. Vorrichtung nach dem vorhergehenden Anspruch, in dem die Schraube (14) so montiert ist, dass sie nur gedreht werden kann, und in der die spiralförmige Schiene zwischen der Schraube (14) und dem Schieber (11) gebildet wird.

15. Vorrichtung nach dem vorhergehenden Anspruch, welche eine Fläche (33) zum Blockieren der Bewegung der Schraube (14) in Verschiebungsrichtung aufweist, wobei besagte Fläche zwischen einer aktiven Blockierungsposition der Schraube (14) und einer inaktiven Auszugsposition der Schraube (14) bewegt werden kann.

16. Vorrichtung nach dem vorhergehenden Anspruch, in dem die Fläche (33) zum Blockieren so gestaltet ist, dass sie gegen eine Auflagefläche (21) der Schraube (14) angelegt werden kann und auf die Schraube (14) eine Kraft ausübt, die der Druckentlastung des zusammendrückbaren Teils entgegenläuft.

17. Vorrichtung nach einem der Ansprüche 12 bis 16, in der die Bedienelemente Betätigungselemente zum Drehen der Schraube (14) enthalten.

18. Vorrichtung nach dem vorhergehenden Anspruch, in der die Betätigungselemente ein manuell zu bedienendes oder motorbetriebenes drehbares Teil enthalten.

19. Vorrichtung nach dem vorhergehenden Anspruch, die eine Markierung für die Winkelposition der Schraube enthält.

20. Vorrichtung nach einem der Anspruche 4 bis 11, in der das zusammendrückbare Element eine Spiralfeder (10) ist.

21. Maschine zur Herstellung eines Getränks durch Aufbrühen, welche eine Vorrichtung nach einem der vorhergehenden Ansprüche enthält und einen unter Druck stehenden Wasserkreis, der mit einer Pumpe versehen ist.

22. Maschine nach dem vorhergehenden Anspruch, in der die Pumpe eine Vibrationspumpe ist.

23. Verfahren zum Aufbrühen einer brühbaren Substanz, bestehend aus folgenden Schritten:
- Aufnahme einer zu brühenden Substanz in einer Brühkammer, die einen Bereich für das Eintreten des Wassers (4) in die Brühkammer und einen Austrittsbereich (2) für das aufgebrühte Getränk aufweist;
- Durchtritt eines unter Druck stehenden Wasserstroms durch die zu brühende Substanz über einen Einspritzkanal, der über ein Einspritzende (40) mit dem Eintrittsteil (4) in fluider Verbindung steht und über ein Einlassende (39) an einem Druckwasserkreis angeschlossen ist,
**dadurch gekennzeichnet, dass** es einen Schritt der Veränderung des Druckwassers im Einspritzkanal umfasst, um einen Druckunterschied zwischen dem Einlassende (39) und dem Einspritzende (40) zu generieren, wobei besagte Änderung von Außen von der Brühkammer aus gesteuert wird durch Bedienelemente, die sich außerhalb der Brühkammer befinden, wobei die Bedienelemente Mittel umfassen, die für den Benutzer, der das Getränk herstellt, zugänglich sind und diese Zugänglichkeit außen an der Vorrichtung gewährleistet ist.

24. Verfahren nach dem vorhergehenden Anspruch, in dem die Phase der Veränderung während des Wasserdurchtritts durch die zu brühende Substanz erfolgt.

## Claims

1. A device for infusing a substance to be infused, having:
- an infusion chamber intended to receive the substance to be infused and to pass a flow of water under pressure through the substance to be infused, the infusion chamber having an inlet part (4) for water into the infusion chamber and an outlet part (2) for infused beverage,
- an injection channel in fluid communication, through an injection end (40), with an inlet part (4) and connectable, by means of an admission end (39), to a pressurised water circuit,
**characterised in that** it comprises adjustable means for varying the pressure of water in the injection channel arranged to generate a difference in water pressure between the admission end (39) and the injection end (40) and controlled by control means external to the infusion chamber, the control means comprising means accessible to the user manufacturing the beverage, this accessibility taking place from the outside of the device.

2. A device according to claim 1, comprising a hood (36) at least partially covering the infusion chamber, the control means being accessible through the external face of the hood (36).

3. A device according to one of the preceding claims, in which the control means are configured to control the adjustment means in the closed position of the infusion chamber.

4. A device according to the preceding claim, in which the control means are configured to control the adjustment means so as to vary the water pressure during the passage of the flow of water through the substance to be infused.

5. A device according one of the preceding claims, in which the control means comprise a manually movable member, the water pressure depending on the position of the manually movable member.

6. A device according to claims 1 to 4, in which the control means comprise an electrical circuit and at least one button controlling the electrical circuit.

7. A device according to the preceding claim, in which the control means comprise means for storing data relating to at least one pressure profile to be applied during an infusion cycle.

8. A device according to the preceding claim, in which the adjustable means are pressure-drop variation means.

9. A device according to the preceding claim, in which the adjustable means comprise:
- a valve (7) mounted counter to elastic return means and configured to close off the injection channel when the water pressure exerted on the valve (7) is less than the return force of the elastic means;
- means for adjusting the return force.

10. A device according to the preceding claim, in which the elastic means comprise a compressible member and in which the adjustment means comprise means for varying the compression of the compressible member.

11. A device according to the preceding claim, in which the means for varying the compression comprise an element bearing on the compressible member, said bearing element being adjustable for position in the direction of compression of the compressible member.

12. A device according to the preceding claim, in which the means for varying the compression comprise a screw (14) forming a helicoidal slide for movement of the bearing element.

13. A device according to the preceding claim, in which the bearing element is a slider (11) able to move in translation under an action of screwing or unscrewing the screw (14).

14. A device according to the preceding claim, in which the screw (14) is mounted so as to be able to move solely in rotation and in which the helicoidal slide is formed between the screw (14) and the slider (11).

15. A device according to the preceding claim, comprising a surface (33) for translational locking of the screw (14), said surface being able to move between an active position of locking the screw (14) and an inactive position of extracting the screw (14).

16. A device according to the preceding claim, in which the locking surface (33) is configured to be applied to an bearing surface (21) of the screw (14) by exerting on the screw (14) a force opposing the decompression of the compressible member.

17. A device according to one of claims 12 to 16, the control means comprising means for rotational actuation of the screw (14).

18. A device according to the preceding claim, in which the actuation means comprise a rotary member with manual control or driven by controlled motor.

19. A device according to the preceding claim, comprising a mark of the angular position of the screw.

20. A device according to one of claims 4 to 11, in which the compressible member is a helicoidal spring (10).

21. A machine for producing a beverage by infusion, comprising a device according to one of the preceding claims and a pressurised water circuit provided with a pump.

22. A machine according to the preceding claim, in which the pump is a vibrating pump.

23. A method for infusing a substance to be infused, in which the following steps are performed:
- receiving a substance to be infused in an infusion chamber having an inlet part (4) for water into the infusion chamber and an outlet part (2) for infused beverage;
- passing a flow of pressurised water through the substance to be infused via an injection channel in fluid communication, through an injection end (40), with the inlet part (4) and connected, by an admission end (39), to a pressurised-water circuit,
**characterised in that** it comprises a step of varying the water pressure in the injection channel in order to generate a difference in pressure between the admission end (39) and the injection end (40), said variation being controlled from the outside of the infusion chamber by control means external to the infusion chamber, the control means comprising means accessible to the user manufacturing the beverage, this accessibility taking place from the outside of the device.

24. A method according to the preceding claim, in which the variation step is performed during the passage of the flow of water through the substance to be infused.
